Europäisches Patentamt

European Patent Office

Office européen des brevets

(19)

(11) Veröffentlichungsnummer: **0 118 692**
**B1**

(12) **EUROPÄISCHE PATENTSCHRIFT**

(45) Veröffentlichungstag der Patentschrift:
**08.06.88**

(51) Int. Cl.⁴: **B 29 C 47/00**

(21) Anmeldenummer: **84100658.8**

(22) Anmeldetag: **23.01.84**

(54) **Pinole für den Dorn eines Schlauchkopfes zur Herstellung von Schlauchabschnitten oder Schläuchen aus thermoplastischem Kunststoff.**

(30) Priorität: **16.02.83 DE 3305242**

(43) Veröffentlichungstag der Anmeldung:
**19.09.84 Patentblatt 84/38**

(45) Bekanntmachung des Hinweises auf die Patenterteilung:
**08.06.88 Patentblatt 88/23**

(84) Benannte Vertragsstaaten:
**AT BE CH DE FR GB IT LI LU NL SE**

(56) Entgegenhaltungen:
**DE-A-2 100 192**
**US-A-4 059 373**
**US-A-4 063 865**

(73) Patentinhaber: **Battenfeld Fischer Blasformtechnik GmbH, Hermann- Löns- Strasse 7, D-5204 Lohmar 1 (DE)**

(72) Erfinder: **Maier, Rudolf, Gartenstrasse 13, D-5204 Lohmar (DE)**

(74) Vertreter: **Müller, Gerd, Patentanwälte HEMMERICH- MÜLLER- GROSSE- POLLMEIER- MEY Hammerstrasse 2, D-5900 Siegen 1 (DE)**

**Beschreibung**

Die Erfindung betrifft einen Schlauchkopf für eine Strangpresse bzw. einen Extruder mit einer Pinole mit axialer Anströmung für den Dorn zur diskontinuierlichen oder kontinuierlichen Herstellung von Schläuchabschnitten oder Schläuchen aus thermoplastischen Kunststoff, die in einem im wesentlichen zylindrischen Gehäuse des Schlauchkopfes an der Stirnfläche des inneren Gehäuseteils befestigt ist sowie zwischen dieser und dem von ihr getragenen Dorn mindestens eine vom Anströmkanal her in Auswärtsrichtung durchströmbare Verteilebene für die Kunststoffschmelze bildet, welche durch einen glockenartigen Ringspalt in den Abflußkanal zwischen dem Gehäuse und dem Dorn mündet.

Durch die DE-AS-1 753 883 ist bereits ein Schlauchkopf zur Herstellung von Schlauchabschnitten bekannt, der im Gehäuse einen durch Stege gehaltenen Kern, eine zu diesem Kern zentrale Materialzuführung und eine Ringdüse sowie einen durch einen koaxial zum Kern verschiebbaren Ringkolben entleerbaren Speicherraum aufweist, in den ein koaxial zum Speicherraum angeordneter Zuführungskanal mündet. Bei diesem Schlauchkopf sind in Fließrichtung des Materials der ringförmige Zuführungskanal und der ringförmige Speicherraum nach den Stegen angeordnet.

Hierdurch wird eine Vergleichmäßigung des Materials erreicht, so daß Fließlinien, Schwächezonen o. dgl., die auf durch die Stege verursachte Druck- und Geschwindigkeitsänderungen zurückzuführen sind, als Folge der Lagebeziehung der den Dorn haltenden Stege zum ringförmigen Zuführungskanal sowie dem Speicherraum, der vom Ringkolben beaufschlagt wird, wesentlich verringert werden.

Die durch die als Distanzglieder wirkenden Stege verursachten Auswirkungen auf Fließwiderstände und Relaxationseigenschaften der thermoplastischen Kunststoffschmelze können jedoch - wie die praktische Erfahrung gezeigt hat - nur mit großem Aufwand vollständig elliminiert werden. Die beim zusammenfließen der in Umfangsrichtung nebeneinanderliegenden Teilströme entstehenden Stoßstellen können auch hier noch nach dem Austritt des Schlauchabschnittes oder Schlauches aus der Ringdüse sowie beim anschließenden Weiterverarbeiten desselben durch Blasformung nachteilig in Erscheinung treten. Diese Unzulänglichkeiten stellen sich um so eher ein, je jöher das mittlere Molekulargewicht des verarbeiteten thermoplastischen Kunststoffes ist, und zwar deshalb, weil die betreffenden Kunststoffe das Bestreben haben, einen einmal eingeschlagenen Fließweg sehr unbeirrbar beizubehalten und daher auch nach stattgefundener Vereinigung der Teilströme einer optimalen Homogenisierung im Stoßstellenbereich Widerstand leisten.

Der Erfindung liegt die Aufgabe zugrunde, einen Schlauchkopf für eine Strangpresse bzw. einen Extruder einer Pinole mit axialer Anströmung für den Dorn der gattungsgemäßen Art zur diskontinuierlichen oder auch kontinuierlichen Herstellung von Schlauchabschnitten oder Schläuchen aus thermoplastischem Kunststoff zu schaffen, welche in den einzelnen Verteilebenen die Ausbildung von in Umfangsrichtung voneinander getrennten Teilströmen sicher verhindert.

Die Lösung dieser Aufgabe wird nach dem Kennzeichen des Anspruchs 1 auf einfache Weise dadurch erreicht, daß jede Verteilebene vom Anströmkanal ausgehende, innere Begrenzungsflächen mit einem durch eine Herzkurve bestimmten, zumindestens aber herzkurvenartigen, symmetrischen Verlauf aufweist. Dabei ist es nach Anspruch 2 weiterhin von erfindungswesentlicher Bedeutung, daß die Herzkurve sich mit ihrer Mulde etwa tangential an den Umfang des Anströmkanals anschließt.

Der wesentliche Vorteil einer solchen Ausbildung der Pinole besteht darin, daß die zur Bildung der Verteilebenen notwendigen Distanzhalteelemente von einem unmittelbar an den Anströmkanal anschließenden, massiven Kernbereich gebildet werden, um den herum die thermoplastische Kunststoffschmelze in einem geschlossenen - also ungeteilten - Ringstrom zum glockenartigen Ringspalt und in den Abflußkanal getrieben wird.

Bewährt hat es sich erfindungsgemäß nach Anspruch 3, daß mindestens zwei Verteilebenen mit Abstand hintereinander liegen und jeweils durch sich glockenartig übergreifende Ringspalte in einen gemeinsamen Abflußkanal münden.

Eine besonders zweckmäßige Weiterbildung der Erfindung besteht nach Anspruch 4 darin, daß sämtliche Verteilebenen einen gemeinsamen, zentralen Anströmkanal haben. Durch die axiale Anströmung der den Verteilebenen zugeordneten Herzkurven ergeben sich in diesen zwischen der Anströmachse und der dieser am nächsten liegenden Abströmstelle am Umfang der Pinole sowie dieser Anströmachse und der davon am weitesten entfernt liegenden Abströmstelle am Umfang der Pinole Wegverhältnisse, die im Bereich von 1 : 2 bis 1 : 4 gelegen sind. Es wird daher eine enge Bandbreite für die Fließwege der thermoplastischen kunststoffschmelze gewährleistet, so daß sich deren Aufenthaltszeiten innerhalb der Fließwege beträchtlich verringern und sich damit vorteilhafte Auswirkungen auf die Fließwiderstände und die Relaxationseigenschaften der Kunststoffschmelze einstellen.

Nach Anspruch 5 wird ein Erfindungsmerkmal auch darin gesehen, daß im Anströmkanal zwischen den Verteilebenen eine Drosselvorrichtung für abstimmbaren Schmelzefluß angeordnet ist.

Nach Anspruch 6 liegt es auch im Rahmen der Erfindung, daß mindestens jeweils zwei unmittelbar hintereinanderliegende Verteilebenen von verschiedenen achsparallelen Anströmkanälen gespeist sind. In diesem Falle kann nach Anspruch 7 in jedem der Anströmkanäle eine Drosselvorrichtung für abstimmbaren Schmelzefluß vorgesehen sein.

Als Folge der nichtzentralen Anströmung der einzelnen Verteilebenen ergeben sich zwar jeweils etwas größere Wegeverhältnisse der nahen und der fernen Abströmstelle zur Anströmstelle der Pinole. Es wird jedoch hier der Vorteil erreicht, daß der Längsmittelbereich des Schlauchkopfes frei ist und zur Unterbringung besonderer Maschinenteile und/oder Flüssigkeits-, Gas- oder Elektroleitungen oder auch für andere Durchführungen benutzt werden kann.

Bewährt hat es sich, wenn gemäß Anspruch 8 die Symmetrieebene der in den verschiedenen Verteilebenen liegenden Herzkurven um die Längsachse des Pinolenkörpers winkelverdreht angeordnet sind. Dabei ist es besonders empfehlenswert, gemäß Anspruch 9 die Herzkurven in zwei unmittelbar hintereinander liegenden Verteilebenen um 180° gegeneinander verdreht anzuordnen.

Die erfindungsgemäße Ausgestaltung einer Pinole bietet die besonders vorteilhafte Möglichkeit, daß nicht nur eine oder zwei, sondern auch mehr, bspw. drei, vier und sechs Verteilebenen für die thermoplastische Kunststoffschmelze hintereinander im Schlauchkopf untergebracht werden können, ohne daß dessen Durchmesser vergrößert werden müßte: Daraus ergibt sich, daß mit steigender Verteilebenenanzahl die Vergleichmäßigung der Schmelzeströme in Umfangsrichtung optimiert werden kann.

Als ein besonders wichtiges Ausgestaltungsmerkmal der Erfindung hat sich nach Anspruch 10 erwiesen, daß neben dem von der Mulde der Herzkurve abgewendeten Umfangsbereich des Anströmkanals in die Verteilebene ein Strömungsleitorgan hineinragt, das vorzugsweise symmetrisch - auf der Symmetrieebene der Herzkurve angeordnet und/oder ausgebildet ist. Bewährt hat sich ferner, wenn nach Anspruch 11 das Strömungsleitorgan als normal zur Verteilebene verstellbarer Nocken mit dem Umfangsbereich des Anströmkanals zugewendeter Schneide gestaltet ist.

Nach Anspruch 12 ist erfindungsgemäß vorgesehen, daß das Strömungsleitorgan bzw. der Nocken einen strömungsgünstigen, z. B. schiffchen- oder rhombenförmigen Querschnitt aufweist, während es bzw. er gemäß Anspruch 13 aus einer Begrenzungsfläche der Verteilebene vorsteht, aber mit - vorzugsweise einstellbarem - Abstand von der gegenüberliegenden Begrenzungsfläche derselben endet.

Eine andere Weiterbildungsmöglichkeit für eine erfindungsgemäße Pinole wird nach Anspruch 14 dadurch erreicht, daß wenigstens neben dem von der Mulde der Herzkurve abgewendeten Umfangsbereich des Anströmkanals in die Verteilebene ein Drosselorgan hineinragt. Dabei besteht gemäß Anspruch 15 die Möglichkeit, das Drosselorgan ortsfest, aber auswechselbar, an einer Begrenzungsfläche der Verteilebene anzuordnen.

In fertigungstechnischer Hinsicht ist nach Anspruch 16 zu empfehlen, die Verteilebene durch normal zur Anströmrichtung in den Umfang des Pinolenkörpers hineinragende Nuten oder Spalte zu bilden und dabei auf den Umfang des Pinolenkörpers jeweils zwischen der einen Begrenzungsfläche einer Verteilebene und der anderen Begrenzungsfläche der nächsten Verteilebene einen glockenartig geformten Strömungsleitkörper vorzusehen.

Nach Anspruch 17 wird ein Ausbildungsmerkmal der Erfindung auch darin gesehen, daß zwischen dem Ende des Pinolenkörpers und dem von diesem getragenen Dorn ein Drosselring koaxial und lösbar angeordnet werden kann. Mittels dieses Drosselrings läßt sich der gemeinsame Abflußkanal zwischen dem Gehäuse und dem Dorn in seinem Durchflußquerschnitt bedarfsabhängig beeinflussen. Hierzu ist es nach Anspruch 18 zweckdienlich, daß der Drosselring durch Stellglieder wenigstens partiell in Radialrichtung elastisch verrückbar angeordnet und/oder ausgebildet ist.

Die nach Anspruch 5 vorgeschlagene Drosselvorrichtung kann gemäß Anspruch 19 aus einer ortsfesten Querschnittseinschnürung zwischen den Verteilebenen im Anströmkanal und aus einem der letzten Verteilebene zugeordneten, verschiebbaren Kolben mit schräger Endfläche bestehen. Hierbei ist vorgesehen, daß nach Anspruch 20 der Kolben vom freien Ende des Schlauchkopfes her über mit Differentialgewinde arbeitende Stellorgane und eine Stange begrenzt axial beweglich ist.

Weitere Merkmale und Vorteile des Gegenstandes der Erfindung werden nachfolgend an in der Zeichnung dargestellten Ausführungsbeispielen erläutert. Es zeigt hierbei

Fig. 1 im Längsschnitt einen Speicher- bzw. Stau-Schlauchkopf einer Strangpresse bzw. eines Extruders zur Herstellung von Schlauchabschnitten oder Schläuchen aus thermoplastischem Kunststoff mit eingebauter Pinole und davon getragenem Dorn,

Fig. 2 den aus dem Speicher- bzw. Stau-Schlauchkopf ausgebauten Pinolenkörper in einer dem Pfeil II-II in Fig. 1 entprechenden Seitenansicht,

Fig. 3 einen Schnitt entlang der Linie III-III durch den Pinolenkörper nach Fig. 2,

Fig. 4 einen Schnitt entlang der Linie IV-IV durch den Pinolenkörper nach Fig. 2,

Fig. 5 einen der Fig. 1 entsprechenden Längsschnitt durch eine abgewandelte Bauart eines Speicher- bzw Stau-Schlauchkopfes, während

Fig. 6 einen Schnitt entlang der Linie VI-VI in Fig. 5 und

Fig. 7 einen Schnitt entlang der Linie VII-VII in Fig. 5 wiedergibt.

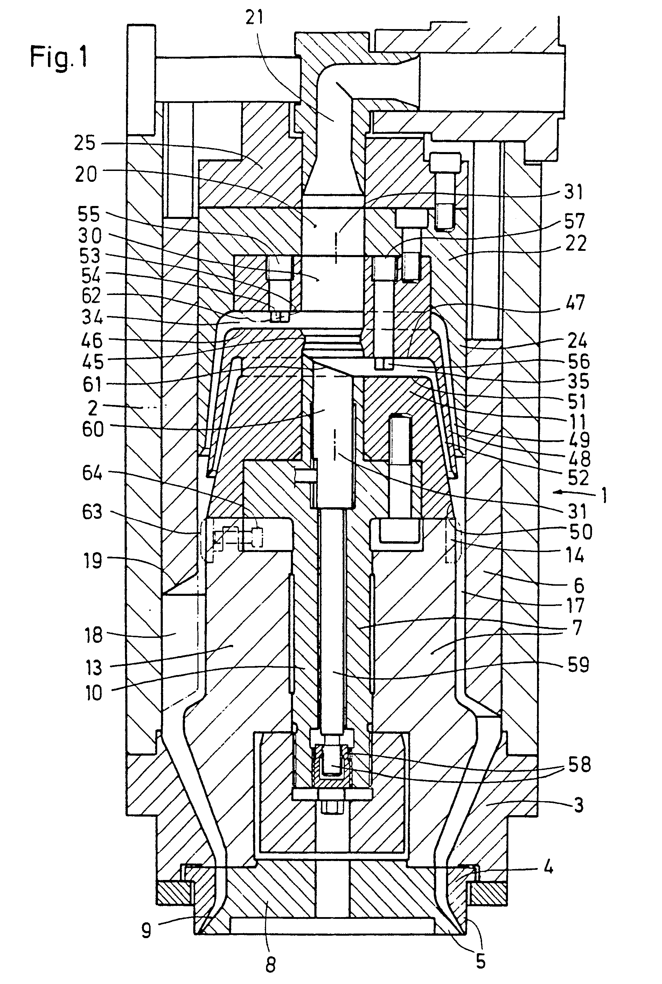

Der in Fig. 1 dargestellte Schlauchkopf 1 ist als Stau- bzw. Speicher-Schlauchkopf ausgebildet, der sich zur Herstellung von Schlauchabschnitten aus thermoplastischem Kunststoff eignet. Er hat ein im wesentlichen zylindrisches Gehäuse 2, an dessen freiem Ende ein sich innen konisch verjüngendes Mundstück 3 befestigt ist, welches wiederum den Düsenring 4 einer Ringdüse 5 trägt.

Im innen zylindrischen Längenbereich des Gehäuses ist begrenzt längsschiebbar ein Ringkolben 6 geführt Innerhalb des Gehäuses 2 ist ferner ein Dorn 7 gehalten, der den Düsenring 8 trägt, welcher mit dem Düsenring 4 die Ringdüse 5 und deren ringförmigen Düsenspalt 9 bildet. Ein Ringkörper 14 ist zwischen dem Dorn 7 und einem koaxial und ortsfest im Gehäuse 2 sitzenden Pinolenkörper 11 angeordnet.

Zwischen dem Dorn 7 und dem Ringkolben 6 ist ein koaxialer Ringspalt 17 gebildet, der in einen Speicherraum 18 einmündet, der wiederum vom Dorn 7, vom Gehäuse 2 und von der Stirnfläche 19 des Ringkolbens 6 begrenzt ist und in das Mundstück 3 übergeht.

Eine koaxiale Bohrung 20 im Gehäuse 2 wird über eine Tülle 21 von der Strangpresse bzw. dem Extruder mit thermoplastischer Kunststoffschmelze versorgt. Die Bohrung 20 mündet in eine koaxiale Bohrung 30 des Pinolenkörpers 11 ein.

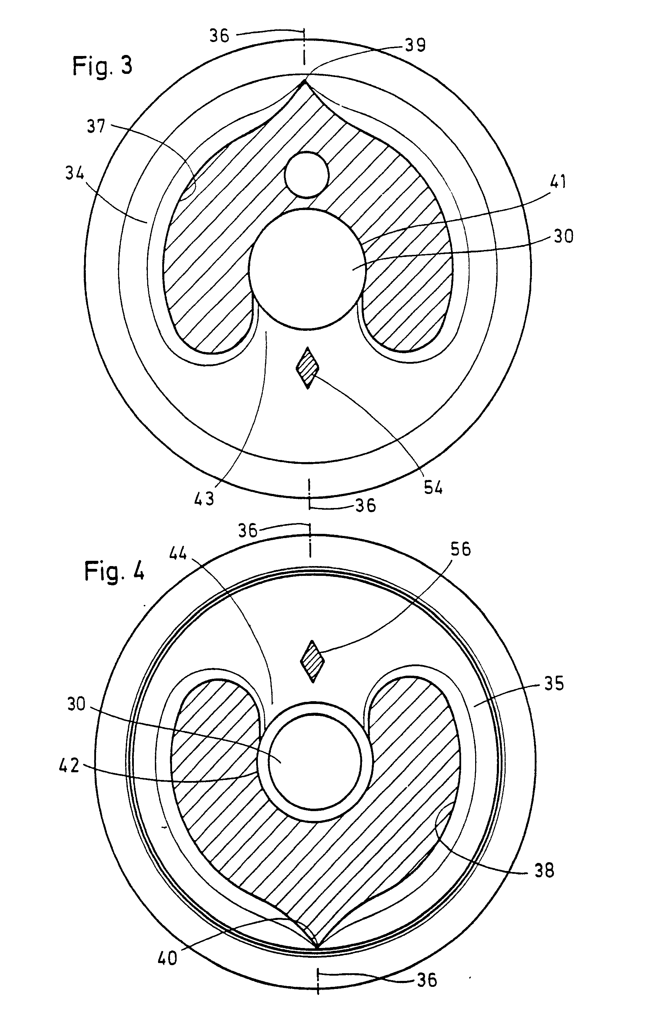

In den Umfang des Pinolenkörpers 11 sind in rechtwinklig zu seiner Längsachse 31-31 verlaufenden Ebenen 32-32 und 33-33 Nuten oder Schlitze 34 und 35 eingeformt, bspw. eingefräst, die an verschiedenen Stellen des Umfangs unterschiedliche Tiefe haben. Dabei ist besonders deutlich aus den Figuren 3 und 4 die unterschiedliche Tiefe der Nuten oder Schlitze 34 und 35 relativ zum Umfang des Pinolenkörpers 11 erkennbar.

Zu sehen ist in den Figuren 3 und 4 auch, daß die Nuten bzw. Schlitze 34 und 35 relativ zu einer durch den Pinolenkörper 11 gelegenen Radialebenen 36-36 jeweils spiegelbildlichen Verlauf haben und ihre innere Begrenzung, bezogen auf die jeweilige Radialebene 36-36, von einer Herzkurve 37 bzw. 38 begrenzt ist. Die Spitze 39 der Herzkurve 37 und die Spitze 40 der Herzkurve 38 liegt jeweils annähernd am Außenumfang des Pinolenkörpers 11, d. h. an dieser Stelle haben die Nuten oder Schlitze 34 und 35 jeweils die Minimaltiefe.

Die beiden Herzkurven 37 und 38 zur inneren Begrenzung der Nuten oder Schlitze 34 und 35 in den beiden Verteilebenen 32-32 und 33-33 sind zueinander um 180° verdreht im Pinolenkörper 11 ausgebildet, wie das die Figuren 3 und 4 deutlich erkennen lassen.

Aus den Figuren 3 und 4 geht des weiteren hervor, daß die Herzkurven 37 und 38 eine Kontur haben, die sich im Bereich der jeweils der Spitze 39 bzw. 40 gegenüberliegenden Mulde 41 bzw. 42 etwa tangential an den Umfang der Bohrung 30 anschließt und dort eine Durchlaßöffnung 43 bzw.

44 von der Bohrung 30 in die Nut 34 bzw. 35 gebildet ist.

Im Bereich zwischen den verschiedenen Verteilebenen 32-32 und 33-33 übereinanderliegenden Nuten bzw. Schlitze 34 und 35 kann die Bohrung 30 im Pinolenkörper 11 mit einer Querschnittseinschnürung 45 versehen sein, wie das deutlich der Figur 1 zu entnehmen ist.

Zwischen der Begrenzungsfläche 46 der Nut bzw. des Schlitzes 34 und der Begrenzungsfläche 47 der Nut bzw. des Schlitzes 35 ist auf dem Umfang des Pinolenkörpers 11 ein glockenförmiger Strömungsleitkörper 48 vorgesehen, dessen Außenmantel mit dem ebenfalls glockenförmig konturierten Innenmantel der Verlängerung 24 des inneren Gehäuseteils 22 einen glockenartigen Ringspalt 49 begrenzt, der von der Nut oder dem Schlitz 34 in den Ringspalt 17 einmündet. Der Innenmantel des glockenartigen Strömungsleitkörpers 48 bildet hingegen mit einer Konusfläche 50 des Pinolenkörpers 21, welche sich an die Begrenzungsfläche 51 der Nut bzw. des Schlitzes 35 anschließt, einen Ringspalt 52, der von dem Schlitz bzw. der Nut 35 ebenfalls in den Ringspalt 17 einmündet. Dabei ist aus Fig. 1 erkennbar, daß der Durchlaßquerschnitt der beiden sich glockenartig übergreifenden Ringspalte 49 und 52 kleiner bemessen ist als der Durchlaßquerschnitt der in den beiden Verteilebenen 32-32 und 33-33 hintereinanderliegenden Schlitze bzw. Nuten 34 und 35.

In den Fig. 1 und 3 ist dargestellt, daß aus der strömungsaufwärtigen Begrenzungsfläche 53 des Schlitzes bzw. der Nut 34 des Pinolenkörpers 11 neben dem von der Mulde 41 der Herzkurve 37 abgewendeten Umfangsbereich der Bohrung 30 in den Schlitz bzw. die Nut 34 ein Strömungsleitorgan 54 hineinragt.

Dieses Strömungsleitorgan 54 ist dabei symmetrisch auf der Symmetrieebene 36-36 der Herzkurve 37 angeordnet und vorteilhafterweise in Normalrichtung zur Ebene 32-32 des Schlitzes bzw. der Nut 34 als verstellbarer Nocken mit rhombenförmigem Querschnitt gestaltet, wie das deutlich die Fig. 3 erkennen läßt. Das Strömungsleitorgan 54 ist am freien Ende eines Schraubgliedes 55 ausgebildet und kann mit dessen Hilfe vor dem Einbau des Pinolenkörpers 11 in seiner Relativlage zum Schlitz bzw. zur Nut 34 justiert werden. In jedem Falle erhält aber die freie Stirnfläche des Strömungsleitorgans 54 einen Abstand von der strömungsabwärtigen Begrenzungsfläche 46 des Schlitzes bzw. der Nut 34, und es ist außerdem wichtig, daß immer eine Schneide seines rhombenförmigen Querschnitts auf der Symmetrieebene 36-36 der Herzkurve 37 der Durchlaßöffnung 43 zugewendet ist.

Auch von der strömungsaufwärtigen Begrenzungsfläche 47 des Schlitzes bzw. der Nut 35 in der zweiten Ebene 33-33 ragt ein Strömungsleitorgan 56 in den Durchlaßquerschnitt des Schlitzes bzw. der Nut 35. Er ist ebenfalls als im Querschnitt rhombennförmiger Hocken gestaltet und in Normalrichtung zur Ebene 33-33 über eine Schraube 57 justierbar im pinolenkörper 11 gehalten. Das Strömungsleitorgan 56 befindet sich an der der Mulde 42 der Herzkurve 38 gegenüberliegenden Umfangsseite der Bohrung 30 in der Durchlaßöffnung 44, und zwar liegt es ebenfalls symmetrisch auf der Symmetrieebene 36-36 der Herzkurve 38. Auch hier wird die Einstellung immer so vorgenommen, daß eine Schneide des rhombenförmigen Hockenquerschnitts auf der Symmetrieebene 36-36 der Durchlaßöffnung 44 zugewendet ist, und daß das freie Ende des Strömungsleitorgans 56 mit einem gewissen Abstand von der strömungsabwärtigen Begrenzungsfläche 51 des Schlitzes bzw. der Nut 35 liegt.

In Fig. 1 der Zeichnung ist noch zu sehen, daß durch das Ankerrohr 10 des Dorns 7 vom freien Ende des Schlauchkopfes 1 her über mit Differentialgewinde arbeitende Stellorgane 58 eine Stange 59 begrenzt axial beweglich ist, die an ihrem oberen Ende einen Kolben 60 trägt, welcher mit einer abgeschrägten Endfläche 61 bis an den Schlitz bzw. die Nut 35 heranreicht, die sich im Pinolenkörper 11 in der unteren Ebene 33-33 befindet.

Durch unterschiedliche Axialeinstellung des Kolbens 60 kann hinter der Einschnürung 45 der Durchlaßquerschnitt der Bohrung 30 zum Schlitz bzw. zur Nut 35 variiert werden.

In Fig. 1 ist schließlich durch strichpunktierte Linien noch angedeutet, daß am Pinolenkörper 11 wenigstens neben dem von der Mulde 41 der Herzkurve 37 abgewendeten Umfangsbereich der Bohrung 30 in den Schlitz bzw. die Nut 34 ein Drosselorgan 62 hineinragen kann. Dieses Drosselorgan 62 ist dabei vorzugsweise ortsfest, aber auswechselbar an der stromaufwärtigen Begrenzungsfläche 53 des Schlitzes bzw. der Nut 34 vorgesehen. Desgleichen ist in Fig. 1 durch strichpunktierte Linien angedeutet, daß der zwischen dem Mantelrohr 13 des Dornes 7 und der Stirnfläche des Pinolenkörpers 11 eingespannte Distanzring 14 eine Profilierung erhalten kann) bei welcher er als Drosselkörper 63 in den Ringspalt 17 zwischen dem Dorn 7 und dem Innenmantel des Ringkolben 6 hineinragt.

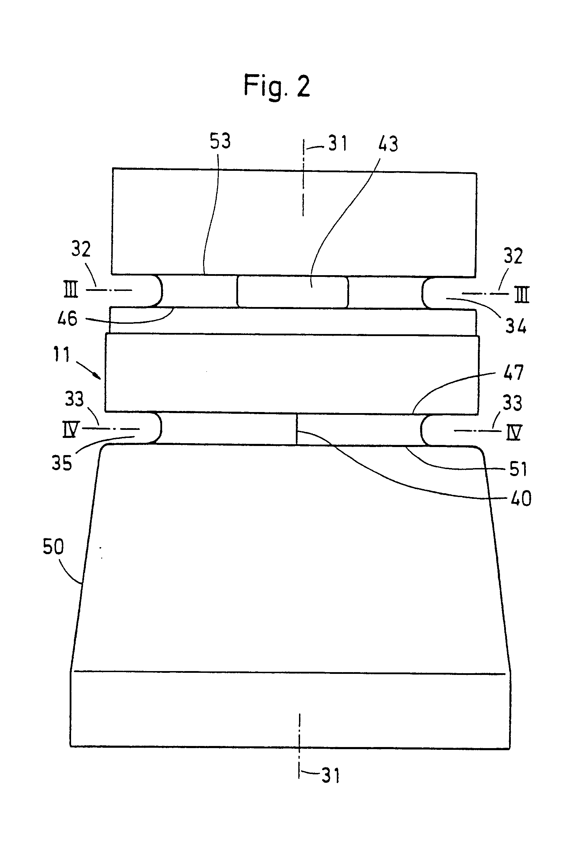

Beim Betrieb des Schlauchkopfes 1 nach den Fig. 1 bis 4 wird die von der Strangpresse bzw. dem Extruder kommende thermoplastische Kunststoffschmelze durch die Tülle 21 der Bohrung 20 zugeführt, von wo sie der Bohrung 30 im Pinolenkörper 11 zufließt.

Durch die axiale Einstellung des Zugdornes 25 wird unter Vermittlung des inneren Gehäuseteils 22, des Pinolenkörpers 11 und des Dorns 7 die Einstellung des Ringspaltes 9 der Ringdüse 5 bestimmt, weil hierdurch die Relativlage zwischen dem Düsenring 4 und dem Düsenkern 8 bestimmt werden kann.

Unabhängig von der jeweiligen Axialstellung des Zugdornes 25 und somit auch aller innerhalb des Gehäuses 2 an diesen angeschlossenen Funktionselemente, bilden die Bohrungen 20 und 30 einen zentralen, axialen Anströmkanal für die thermoplastische Kunststoffschmelze zum Pinolenkörper 11 hin.

Im Pinolenkörper 11 werden dann aus der als zentraler Anströmkanal wirkenden Bohrung 30 die in den beiden Ebenen 32-32 und 33-33 liegenden und in Umfangsrichtung verlaufenden Schlitze bzw. Nuten 34 und 35 gespeist. Der gleichmäßigen Verteilung der thermoplastischen Kunststoffschmelze in die beiden Schlitze bzw. Nuten 34 und 35 ist dabei die Querschnittseinschnürung 45 in der Bohrung 30 dienlich, welche gemäß Fig. 1 zwischen den beiden Verteilebenen 32-32 und 33-33 liegt.

Die thermoplastische Kunststoffschmelze tritt aus der den zentralen, axialen Anströmkanal bildenden Bohrung 30 jeweils seitwärts durch die Durchlaßöffnung 43 und 44 in die in Umfangsrichtung verlaufenden Schlitze bzw. Nuten 34 und 35 ein. Dabei trifft ein Teil der thermoplastischen Kunststoffschmelze schon im Durchlaß 43 bzw. 44 auf das Strömungsteilorgan 54 bzw. 56.

Von der der Durchlaßöffnung 43 bzw. 44 zugewendeten Schneide und den von dieser aus spitzwinklig divergierenden Flächen des Strömungsleitorgans 54 bzw. 56 werden zwei Anteile der aus der Durchlaßöffnung 43 bzw. 44 austretenden, thermoplastischen Kunststoffmasse seitwärts so abgelenkt, daß sie sich entlang der Herzkurve 37 bzw. 38 zunächst über einen bestimmten Streckenabschnitt voneinander weg und dann wieder aufeinander zu bewegen, während sie gleichzeitig radial nach auswärts zum glockenförmigen Ringspalt 49 bzw. 52 hin fließen.

Ein dritter Anteil der aus der Durchlaßöffnung 34 bzw. 44 austretenden thermoplastischen Kunststoffmasse fließt jedoch unter dem Strömungsleitorgan 54 bzw. 56 hindurch, und zwar im wesentlichen radial nach auswärts. Bezogen auf die Längsmittelachse der als Anströmkanal wirkenden Bohrung 30 des Pinolenkörpers 11 bewegt sich also der unter Einfluß unter dem Strömungsleitorgan 54 bzw. 56 hindurchfließende Anteil der thermoplastischen Kunststoffmasse zu einer nahen Abströmstelle am Umfang des Pinolenkörpers 11, während die beiden jeweils seitwärts abgelenkten Anteile derselben entlang der Herzkurve 37 bwz. 38 sowie gleichzeitig radial nach auswärts fließen, wobei der längste Fließweg und damit die ferne Abströmstelle jeweils durch die Spitze 39 bzw. 40 der Herzkurve 37 bzw. 38 bestimmt ist.

Die Formgestaltung der Herzkurve 37 und 38 ist jeweils so gewählt, daß das Verhältnis zwischen der nahen Abströmstelle und der fernen Abströmstelle im Bereich zwischen 1 : 2 bzw. 1 : 4 liegt. Als nahe Abströmstelle ist dabei, bezogen auf die Symmetrieebene 36-36 der Herzkurve 37 bzw. 38 derjenige Umfangsbereich des Pinolenkörpers 11 anzusehen, welcher der Ausströmöffnung 43 bzw. 44 benachbart ist, während die ferne Abströmstelle durch die auf der Symmetrieebene 36-36 liegende Spitze 39 bzw. 40 der Herzkurve 37 bzw. 38 bestimmt ist.

Die besondere Ausgestaltung des Pinolenkörpers 11 im Bereich seiner Verteilebenen 32-32 und 33-33 stellt einerseits sicher, daß ein über den gesamten Umfang ungeteilter sowie gleichmäßiger Massestrom des thermoplastischen Kunststoffs in die glockenartigen Ringspalte 49 und 52 geleitet wird. Andererseits wird durch die enge Bandbreite für die Fließwege der thermoplastischen Kunststoffmassen die Bandbreite der Aufenthaltszeit im Bereich des Pinolenkörpers beträchtlich vermindert, so daß sich positive Auswirkungen bezüglich der Fließwiderstände und Relaxationseigenschaften ergeben.

Das Fließverhalten der thermoplastischen Kunststoffschmelze in den Schlitzen bzw. Nuten 34 und 35 des Pinolenkörpers 11 kann auch dadurch beeinflußt werden, daß anstelle des oder zusätzlich zum Strömungsleitorgan 54 bzw. 56 der strömungsaufwärtigen Begrenzungsfläche 53 bzw. 57 des Schlitzes bzw. der Nut 34 bzw. 35 das Drosselorgan 62 vorgesehen wird. Dieses Drosselorgan 62 kann dabei ortsfest aber auswechselbar vorgesehen werden und wenigstens neben dem von der Mulde 41 bzw. 42 der Herzkurve 37 bzw. 38 abgewendeten Umfangsbereich der als Anströmkanal dienenden Bohrung 30, wie das in Fig. 1 durch die strichpunktierten Linien angedeutet ist.

Es sei noch erwähnt, daß der Pinolenkörper 11 ausschließlich durch entsprechende Variation seiner Längenabmessung, also ohne Änderung seines Durchmessers, auch mit mehr als zwei, bspw. mit drei, vier oder auch sechs Verteilebenen versehen werden kann, wobei sich mit steigender Anzahl der Verteilebenen eine immer bessere Rundumverteilung und Homogenisierung der Schmelzströme bei ihrem Eintritt in den Ringspalt 17 erreichen läßt. Diese Homogenisierung kann, besonders dann, wenn nur wenige bspw. nur zwei, Verteilebenen vorhanden sind, auch dadurch begünstigt werden, daß mit geringem Abstand hinter der Mündung des letzten glockenförmigen Ringspaltes 52, und zwar im Bereich des Ringkörpers 14 im Ringspalt 17 eine kurze Querschnitts-Drosselstrecke 63 ausgebildet wird. Hierzu kann der Ringkörper 14 aus elastisch verformbarem Material, z. B. dünnem Federstahl, bestehen sowie mittels Stellgliedern, bspw. Schrauben 64, wenigstens partiell in Radialrichtung verrückbar angeordnet werden.

Erwähnt sei auch noch, daß durchaus die Möglichkeit besteht, den einzelnen Verteilebenen 32-32 und 33-33 des Pinolenkörpers 11 jeweils mehr als ein Strömungsleitorgan 54 bzw. 56 zuzuordnen und, bezogen auf die Symmetrieebene 36-36 der Herzkurve 37 und 38 symmetrisch gestaffelt vorzusehen. Wichtig ist dabei aber in jedem Falle, daß die Strömungsleitorgane eine Anordnung und Ausbildung haben, die dem Entstehen voneinander getrennter Masseströme entgegenwirkt.

Eine Variation der Masseströme durch die verschiedenen Verteilebenen 32-32 und 33-33 läßt sich ohne Durchführung von irgendwelchen Demontagearbeiten dadurch bewirken, daß der der Verteilebene 33-33 zugeordnete Kolben 60 und damit dessen geneigte Stirnfläche 61 in seiner axialen Lage vom freien Ende des Schlauchkopfes 1 her justiert wird.

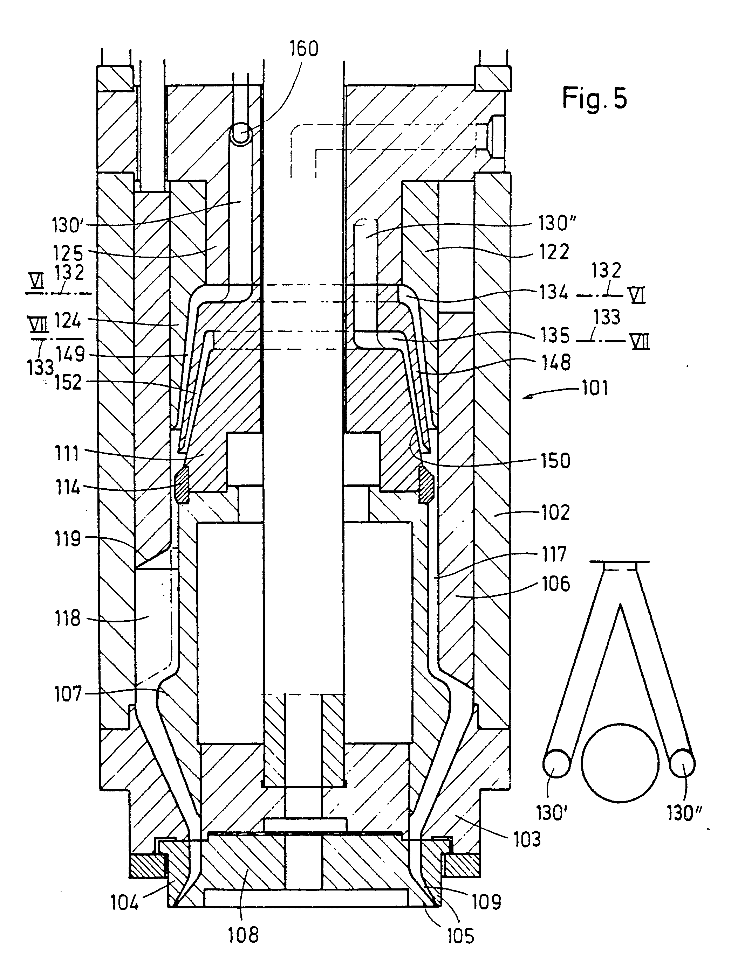

Der in Fig. 5 dargestellte Schlauchkopf 101 weist den gleichen Grundaufbau auf, wie der in den Fig. 1 bis 4 dargestellte Schlauchkopf 1. Deshalb sind auch die baulich bzw. funktionell übereinstimmenden Teile beim Ausführungsbeispiel nach Fig. 5 mit den gleichen, jedoch numerisch um 100 erhöhten Bezugszahlen versehen.

Der wesentliche Unterschied des Schlauchkopfes 101 nach Fig. 5 gegenüber dem Schlauchkopf 1 nach Fig. 1 besteht darin, daß anstelle eines gemeinsamen zentralen, axialen Anströmkanals für die verschiedenen Verteilebenen 32-32 und 33-33 des Pinolenkörpers mehrere achsparallel zueinander und zur Längsmittelachse des Schlauchkopfes 101 verlaufende Anströmkanäle 130' und 130'' vorhanden sind, die einzeln, z. B. jeweils durch ein eigenes Drosselorgan 160, für den Schmelzefluß abstimmbar sind.

Eine solche Ausgestaltung für den Schlauchkopf 101 wirkt sich dann vorteilhaft aus, wenn es erwünscht oder gar erforderlich ist, im Bereich der Längsmittelachse desselben besondere Maschinenteile oder auch Wasserkühlungs- bzw. Luftkanäle und andere Durchführungen unterzubringen.

Die seitlich aus der Längsmittelachse des Schlauchkopfes 101 versetzte Anordnung der Anströmkanäle 130' und 130'' führt zwar gegenüber einer Ausführung mit zentraler, axialer Anordnung der Anströmkanäle zu einer Vergrößerung der Wegeverhältnisse zwischen der nahen und der fernen Abströmstelle am Umfang des Pinolenkörpers 111. Jedoch ist auch hier die Bandbreite für die Fließwege und damit für die Aufenthaltzeiten noch so gering, daß sich günstige Auswirkungen auf die Fließwiderstände und Relaxationseigenschaften der thermoplastischen Kunststoffschmelze einstellen.

Bei dem in Fig. 5 dargestellten Ausführungsbeispiel eines Schlauchkopfes 101 ist als in der Längsmittelachse desselben angeordnetes Maschinenteil eine Schubstange 164 gezeigt, mit deren Hilfe sich der Düsenkern 108 relativ zum Düsenring 104 zwecks Einstellung des Düsenspaltes 109 der Ringdüse 105 verstellen läßt.

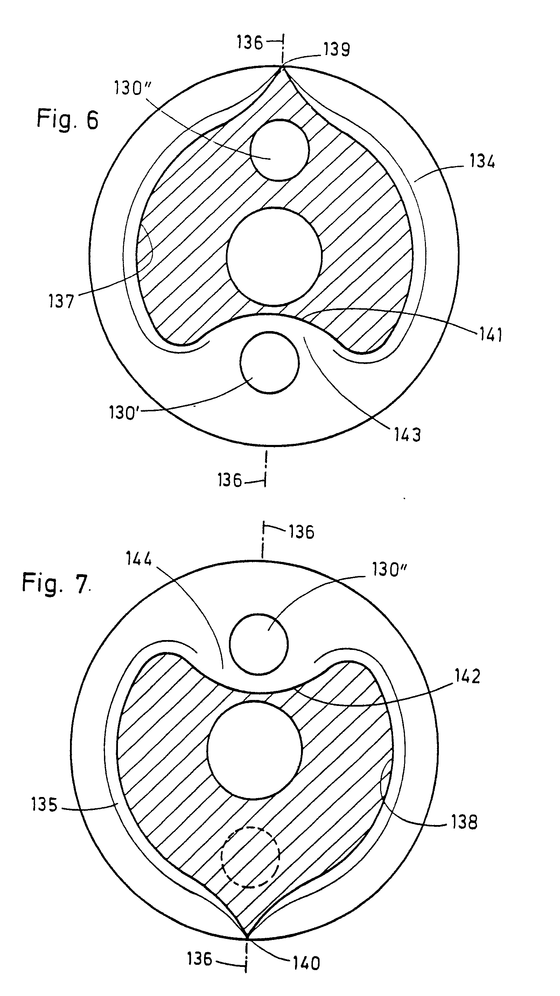

Aus den Fig. 6 und 7 ist die Ausbildung der in den verschiedenen Ebenen im Umfang des Pinolenkörpers 111 vorgesehenen Schlitze bzw. Nuten 134 und 135 ersichtlich. Ihre innere Begrenzung wird ebenfalls von Herzkurven 137 und 138 gebildet) die an ihrer den Anströmkanälen 130' bzw. 130'' benachbarten Seite eine Mulde 141 bzw. 142 haben und diametral gegenüberliegend in die Spitzen 139 bzw. 140 auslaufen. Mulden 141 bzw. 142 und Spitzen 139 bzw. 140 liegen dabei auf einer gemeinsamen Radialebene 136-136, sind jedoch in den beiden Ebenen 132 und 133 um 180° verdreht angeordnet. Jede der Mulden 141 bzw. 142 hat dabei eine sich vom Anströmkanal 130′ bzw. 130″ weg symmetrisch zur Radialebene 136-136 erweiternde Öffnung 143 bzw. 144, die die Verteilung der Kunststoffschmelze bewirkt.

**Patentansprüche**

1. Schlauchkopf (1) für eine Strangpresse bzw. einen Extruder mit einer Pinole (11) mit axialer Anströmung für den Dorn (7) zur diskontinuierlichen oder kontinuierlichen Herstellung von Schlauchabschnitten oder Schläuchen aus thermoplastischem Kunststoff, die in einem im wesentlichen zylindrischen Gehäuse (2) des Schlauchkopfes (1) an der Stirnfläche des inneren Gehäuseteils (22) befestigt ist sowie zwischen dieser und dem von ihr getragenen Dorn (7) mindestens eine vom Anströmkanal (30) her in Auswärtsrichtung durchströmbare Verteilebene (32-32 bzw. 33-33) für die Kunststoffschmelze bildet, welche durch einen glockenartigen Spalt (49, 52) in den Abflußkanal (17) zwischen dem Gehäuse (2) und Dorn (7) mündet, dadurch gekennzeichnet, daß jede Verteilebene (32-32 und 33-33) von der Anströmkanalbohrung (30) ausgehende, innere Begrenzungsflächen (37 und 38) mit einem durch eine Herzkurve bestimmten, zumindest aber herzkurvenartig, symmetrischen Verlauf aufweist (Fig. 3 und 4).

2. Schlauchkopf nach Anspruch 1, dadurch gekennzeichnet, daß die Herzkurve (37, 38) sich mit ihrer Mulde (41 und 42) etwa tangential an den Umfang der Anströmkanalbohrung (30) anschließt (Fig. 3 und 4).

3. Schlauchkopf nach einem der Ansprüche 1 und 2, dadurch gekennzeichnet, daß mindestens zwei Verteilebenen (32-32 und 33-33) mit Abstand hintereinander liegen und jeweils durch sich glockenartig übergreifende Ringspalte (49, 52) in einen gemeinsamen Abflußkanal-Ringspalt (17) münden (Fig. 1 und 5).

4. Schlauchkopf nach einem der Ansprüche 1 bis 3, dadurch gekennzeichnet, daß sämtliche Verteilebenen (32-32 und 33-33) eine gemeinsame, zentrale Anströmkanalbohrung (30) haben (Fig. 1, 3 und 4).

5. Schlauchkopf nach einem der Ansprüche 1 bis 4, dadurch gekennzeichnet, daß im Bereich der Anströmkanalbohrung (30) zwischen den Verteilebenen (32-32 und 33-33) eine Drosselvorrichtung (45 bzw. 60, 61) für abstimmbaren Schmelzfluß angeordnet ist (Fig. 1).

6. Schlauchkopf nach einem der Ansprüche 1 bis 3, dadurch gekennzeichnet, daß mindestens jeweils zwei unmittelbar hintereinander liegende Verteilebenen (132-132 und 133-133) von verschiedenen achsparallelen Anströmkanälen (130′ und 130″) gespeist sind (Fig. 5).

7. Schlauchkopf nach einem der Ansprüche 1 bis 3 und 6, dadurch gekennzeichnet, daß in jedem der Anströmkanäle (130′ und 130″) ein Drosselorgan (160) für abstimmbaren Schmelzefluß vorgesehen ist (Fig. 5).

8. Schlauchkopf nach einem der Ansprüche 1 bis 7, dadurch gekennzeichnet, daß die Symmetrieebene (36-36) der in den verschiedenen Verteilebenen (32-32 und 33-33) liegenden Herzkurven (37 und 38) um die Längsachse (31-31) des Pinolenkörpers (11) zueinander winkelverdreht angeordnet sind (Fig. 3 und 4).

9. Schlauchkopf nach einem der Ansprüche 1 bis 8, dadurch gekennzeichnet, daß die Herzkurven (37 und 38) in zwei unmittelbar hintereinander liegenden Verteilebenen (32-32 und 33-33) um 180° gegeneinander winkelverdreht angeordnet sind (Fig. 3 und 4).

10. Schlauchkopf nach einem der Ansprüche 1 bis 9, dadurch gekennzeichnet, daß neben dem von der Mulde (41 bzw. 42) der Herzkurve (37 bzw. 38) abgewendeten Umfangsbereich der Anströmkanalbohrung (30) in die Verteilebene (32-32 und 33-33) ein Strömungsleitorgan (54 bzw. 56) hineinragt, das - vorzugsweise symmetrisch - auf der Symmetrieebene (36-36) der Herzkurve (37 bzw. 38) angeordnet und/oder ausgebildet ist (Fig. 1, 3 und 4).

11. Schlauchkopf nach einem der Ansprüche 1 bis 10, dadurch gekennzeichnet, daß das Strömungsleitorgan (54 bzw. 56) als normal zur Verteilebene (32-32 bzw. 33-33) verstellbarer Nocken mit dem Umfangsbereich der Anströmkanalbohrung (30) zugewendeter Schneide gestaltet ist (Fig. 3 und 4).

12. Schlauchkopf nach einem der Ansprüche 1 bis 11, dadurch gekennzeichnet, daß das Strömungsleitorgan bzw. der Nocken (54 bzw. 56) einen strömungsgünstigen, z. B. schiffchen- oder rhombenförmigen, Querschnitt aufweist (Fig. 3 und 4).

13. Schlauchkopf nach einem der Ansprüche 1 bis 12, dadurch gekennzeichnet, daß das Strömungsleitorgan bzw. der Nocken (54 bzw. 56) aus einer Begrenzungsfläche (53 bzw. 47) der Verteilebene (32-32 bzw. 33-33) vorsteht, aber mit - vorzugsweise einstellbarem - Abstand von der gegenüberliegenden Begrenzungsfläche (46 und 51) derselben endet (Fig. 1).

14. Schlauchkopf, nach einem der Ansprüche 1 bis 13, dadurch gekennzeichnet, daß wenigstens neben dem von der Mulde (41 bzw. 42) der Herzkurve (37 bzw. 38) abgewendeten Umfangsbereich der Anströmkanalbohrung (30) in die Verteilebene (32-32) ein Drosselorgan (62) hineinragt (Fig. 1).

15. Schlauchkopf nach einem der Ansprüche 1 bis 14, dadurch gekennzeichnet, daß das Drosselorgan (62) ortsfest aber auswechselbar an einer Begrenzungsfläche (53) der Verteilebene (32-32) angeordnet ist (Fig. 1).

16. Schlauchkopf nach einem der Ansprüche 1 bis 15, dadurch gekennzeichnet, daß die Verteilebenen (32-32 und 33-33) durch normal zur Anströmrichtung in den Umfang des Pinolenkörpers (11 bzw. 111) hineinragende Nuten oder Spalte (34 und 35 bzw. 134 und 135) gebildet sind, und dabei auf dem Umfang des Pinolenkörpers (11 bzw. 111) jeweils zwischen der einen Begrenzungsfläche (46) einer Verteilebene (32-32) und der anderen Begrenzungsfläche (47) der nächsten Verteilebene (33-33) ein glockenartig geformter Strömungsleitkörper (48 bzw. 148) vorgesehen ist (Fig. 1 und 5).

17. Schlauchkopf nach einem der Ansprüche 1 bis 16, dadurch gekennzeichnet, daß zwischen dem Ende des Pinolenkörpers (11) und dem von diesen getragenen Dorn (7) ein Ringkörper (14, 63) koaxial und lösbar eingespannt ist (Fig. 1).

18. Schlauchkopf nach einem der Ansprüche 1 bis 17, dadurch gekennzeichnet, daß der Ringkörper (14, 63) durch Stellglieder (64) wenigstens partiell in Radialrichtung relativ zum Ringspalt (17) elastisch verrückbar angeordnet und/oder ausgebildet ist (Fig. 1).

19. Schlauchkopf nach einem der Ansprüche 1 bis 5 und 8 bis 18, dadurch gekennzeichnet, daß die Drosselvorrichtung (45; 60, 61) aus einer ortsfesten Querschnittseinschnürung (45) zwischen den Verteilebenen (32-32 und 33-33) im Bereich der Anströmkanalbohrung (30) und aus einem der letzten Verteilebene (33-33) zugeordneten, verschiebbaren Kolben (60) mit schräger Endfläche (61) besteht.

20. Schlauchkopf nach einem der Ansprüche 1 bis 5 und 8 bis 19, dadurch gekennzeichnet, daß der Kolben (60) vom freien Ende des Schlauchkopfes (1) her über mit Differentialgewinde arbeitende Stellorgane (58) und eine Stange (59) begrenzt axial beweglich ist.

**Claims**

1. A parison head (1) for an extrusion press or extruder, having a mandrel head (11) which bas axial approach flow for the mandrel (7) for the discontinuous or continuous production of portions of parison or parisons from thermoplastic plastics and which is fixed in an essentially cylindrical housing (2) in the parison bead (1) against the endface of the inner part (22) of the housing and also forms between the said endface and the mandrel (7) carried by it at least one distributor plane (32-32 or 33-33 respectively) through which the molten plastics is able to flow from the approach flow channel (30) in the outwards direction and which opens out through a bell-like gap (49, 52) into the outlet channel (17) between the housing (2) and the mandrel (7), characterized in that each distributor plane (32-32 and 33-33), starting from the approach flow channel bore (30), exhibits inner boundary faces (37 and 38) having a course which is defined by a cardioid but is at least symmetrical after the style of a cardioid (Figures 3 and 4).

2. A parison head as in Claim 1, characterized in that the cardioid (37, 38) is connected at its trough (41 and 42) approximately tangentially to the circumference of the approach flow channel bore (30) (Figures 3 and 4).

3. A parison head as in one of the Claims 1 and 2, characterized in that at least two distributor planes (32-32 and 33-33) lie at a distance one behind the other and open out through annular gaps (49, 52) which overlap in a bell-like manner into a common outlet channel annular gap (17) (Figures 1 and 5).

4. A parison bead as in one of the Claims 1 to 3, characterized in that all of the distributor planes (32-32 and 33-33) have a common central approach flow channel bore (30) (Figures 1, 3 and 4).

5. A parison head as in one of the Claims 1 to 4, characterized in that in the region of the approach flow channel bore (30) between the distributor planes (32-32 and 33-33) a throttle device (45 resp. 60, 61) is arranged for the flow of melt to be able to be matched (Figure 1).

6. A parison head as in one of the Claims 1 to 3, characterized in that at least every two distributor planes (132-132 and 133-133) lying directly one behind the other, are fed from different axially parallel approach flow channels (130' and 130'') (Figure 5).

7. A parison head as in one of the Claims 1 to 3 and 6, characterized in that in each of the approach flow channels (130' and 130'') a throttle member (160) is provided for the flow of melt to be able to be matched (Fig. 5).

8. A parison head as in one of the Claims 1 to 7, characterized in that the respective planes of symmetry (36-36) of the cardioids (37 and 38) lying in the different distributor planes (32-32 and 33-33) are arranged twisted angularly with respect to one another about the longitudinal axis (31-31) of the mandrel head body (11) (Figures 3 and 4).

9. A parison head as in one of the Claims 1 to 8, characterized in that the cardioids (37 and 38) in two distributor planes (32-32 and 33-33) lying directly one behind the other are arranged twisted angularly with respect to one another through 180° (Figures 3 and 4).

10. A parison head as in one of the Claims 1 to 9, characterized in that near to the circumferential region of the approach flow channel bore (30) remote from the trough (41 resp. 42) of the cardioid (37 resp. 38) a flow guide member (54 resp. 56) projects into the distributor plane (32-32 and 33-33) and - preferably symmetrically - is arranged and/or constructed on the plane of symmetry (36-36) of the cardioid (37 resp. 38) (Figures 1, 3 and 4).

11. A parison head as in one of the Claims 1 to 10, characterized in that the flow guide member (54 resp. 56) is shaped as a cam adjustable normally to the distributor plane (32-32 resp. 33-33) and having a knife edge turned to the circumferential region of the approach flow channel bore (30) (Figures 3 and 4).

12. A parison head as in one of the Claims 1 to 11, <u>characterized in that</u> the flow guide member or respectively the cam (54 resp. 56) exhibits a cross-section favourable to flow, e.g. boat-shaped or rhomboidal (Figures 3 and 4).

13. A parison head as in one of the Claims 1 to 12, <u>characterized in that</u> the flow guide member or respectively the cam (54 resp. 56) projects out of one boundary face (53 resp. 47) of the distributor plane (32-32 resp. 33-33) but ends at a - preferably adjustable - distance from the opposite boundary face (46 and 51) of the latter (Figure 1).

14. A parison head as in one of the Claims 1 to 13, <u>characterized in that</u> at least near to the circumferential region of the approach flow channel bore (30) remote from the trough (41 resp. 42) of the cardioid (37 resp. 38) a throttle member (62) projects into the distributor plane (32-32) (Figure 1).

15. A parison head as in one of the Claims 1 to 14, <u>characterized in that</u> the throttle member (62) is arranged stationary but replaceably on one boundary face (53) of the distributor plane (32-32) (Figure 1).

16. A parison head as in one of the Claims 1 to 15, <u>characterized in that</u> the distributor planes (32-32 and 33-33) are formed by grooves or gaps (34 and 35 resp. 134 and 135) projecting normally to the approach flow direction into the circumference of the mandrel head body (11 resp. 111), and moreover on the circumference of the mandrel head body (11 resp. 111) in each case between the one boundary face (46) of one distributor plane (32-32) and the other boundary face (47) of the next distributor plane (33-33) a flow guide body (48 resp. 148) shaped like a bell is provided (Figures 1 and 5).

17. A parison head as in one of the Claims 1 to 16, <u>characterized in that</u> between the end of the mandrel head body (11) and the mandrel (7) carried by it an annular body (14, 63) is clamped coaxially and detachably (Figure 1).

18. A parison head as in one of the Claims 1 to 17, <u>characterized in that</u> the annular body (14, 63) is arranged and/or constructed to be elastically displaceable by positioning members (64) at least partially in the radial direction relatively to the annular gap (17) (Figure 1).

19. A parison head as in one of the Claims 1 to 5 and 8 to 18 <u>characterized in that</u> the throttle device (45; 60, 61) consists of a stationary constriction (45) in cross-section between the distributor planes (32-32 and 33-33) in the region of the approach flow channel bore (30) and of a displaceable piston (60) having an oblique endface (61), associated with the last distributor plane (33-33).

20. A parison head as in one of the Claims 1 to 5 and 8 to 19 <u>characterized in that</u> the piston (60) is movable axially to a limited extent from the free end of the parison head (1) via positioning members (58) working by differential threads and a rod (59).

## Revendications

1. Tête à tuyau flexible (1) pour une boudineuse ou une extrudeuse comportant un embout (11) qui assure un écoulement axial pour l'arrivée dans le mandrin (7) pour la fabrication discontinue ou continue de sections de tuyau flexible ou de tuyaux flexibles en matière thermoplastique, qui est fixé dans l'enveloppe (2) essentiellement cylindrique de la tête de tuyau flexible (1) à la surface frontale de la partie d'enveloppe intérieure (22) et qui détermine, entre celle-ci et le mandrin qu'il porte, au moins un plan de distribution (32-32 ou 33-33) de la matière plastique liquide qui permet son écoulement du conduit d'arrivée (30) vers l'extérieur et qui, par l'intermédiaire d'un intervalle (49, 52) en forme de cloche, aboutit au canal de sortie (17) entre l'enveloppe (2) et le mandrin (7), caractérisée en ce que chaque plan de distribution (32-32 et 33-33) comporte des surfaces de délimitation intérieures (37 et 38) qui partent de l'alésage (30) du conduit d'arrivée et présentent un contour symetrique défini par une cardioïde, en tout cas au moins par une courbe du type cardioïde (Figures 3 et 4).

2. Tête à tuyau flexible selon la revendication 1, caractérisée en ce que la cardioïde (37, 38) se raccorde par une concavité (41 et 42) à peu près tangentiellement au contour de l'alésage (30) du conduit d'arrivée (Figures 3 et 4).

3. Tête à tuyau flexible selon l'une des revendications 1 ou 2, caractérisée en ce que deux plans de distribution au moins (32-32 et 33-33) sont situés l'un derrière l'autre à une certaine distance l'un de l'autre et, par l'intermédiaire d'intervalles annulaires (49, 52) en forme de cloches qui se recouvrent, aboutissent à un intervalle annulaire commun (17) constituant le conduit de sortie (Figures 1 et 5).

4. Tête à tuyau flexible selon l'une des revendications 1 à 3, caractérisée en ce que tous les plans de distribution (32-32 et 33-33) comportent un alésage de conduit d'arrivée central commun (30) (Figures 1, 3 et 4).

5. Tête à tuyau flexible selon l'une des revendications 1 à 4, caractérisée en ce que, dans la zone de l'alésage (30) du conduit d'arrivée, elle comprend, entre les plans de distribution (32-32 et 33-33), un dispositif d'étranglement (45 ou 60, 61) pour le réglage de l'écoulement (Figure 1).

6. Tête à tuyau flexible selon l'une des revendications 1 à 3, caractérisée en ce qu'au moins deux plans de distribution (132-132 et 133-133) situés immédiatement l'un derrière l'autre sont alimentés par différents conduits d'arrivée (130' et 130'') d'axes parallèles (Figure 5).

7. Tête à tuyau flexible selon l'une des revendications 1 à 3 et 6, caractérisée en ce que, dans chacun des conduits d'arrivée (130' et 130''), elle comporte un organe d'étranglement (160) pour le réglage de l'écoulement (Figure 5).

8. Tête à tuyau flexible selon l'une des revendications 1 à 7, caractérisée en ce que les plans de symétrie (36-36) des cardioïdes (37 et 38) situées dans les différents plans de distribution (32-32 et 33-33) ont des orientations angulaires différentes les uns par rapport aux autres autour de l'axe longitudinal (31-31) du corps de l'embout (11).

9. Tête à tuyau flexible selon l'une des revendications 1 à 8, caractérisée en ce que les cardioïdes (37 et 38) qui se trouvent dans deux plans de distribution (32-32 et 33-33) situés l'un derrière l'autre ont l'une par rapport à l'autre des orientations angulaires qui diffèrent de 180° (Figures 3 et 4).

10. Tête à tuyau flexible selon l'une des revendications 1 à 9, caractérisée en ce qu'à proximité de la zone du contour de l'alésage (30) du conduit d'arrivée qui est la plus éloignée de la concavité (41 ou 42) de la cardioïde (37 ou 38) elle comporte un organe (54 ou 56) de direction de l'écoulement qui pénètre dans le plan de distribution (32-32 et 33-33) et qui est placé et/ou réalisé, de préférence d'une manière symétrique, dans le plan de symétrie (36-36) de la cardioïde (37 ou 38) (Figures 1, 3 et 4).

11. Tête à tuyau flexible selon l'une des revendications 1 à 10, caractérisée en ce que l'organe (54 ou 56) de guidage de l'écoulement est constitué par une came qui peut faire saillie normalement au plan de distribution (32-32 ou 33-33) et comporte un tranchant tourné vers la zone du contour périphérique de l'alésage (30) du conduit d'arrivée.

12. Tête à tuyau flexible selon l'une des revendications 1 à 11, caractérisée en ce que l'organe de guidage de l'écoulement ou la came (54 ou 56) a une section hydrodynamique, par exemple une section en navette ou en losange (Figures 3 et 4).

13. Tête à tuyau flexible selon l'une des revendications 1 à 12, caractérisée en ce que l'organe de guidage de l'écoulement ou la came (54 ou 56) fait saillie à partir d'une surface de limitation (53 ou 47) du plan de distribution (32-32 ou 33-33), mais se termine à une distance de préférence réglable de la surface de délimitation opposée (46 et 51) de ce plan (Figure 1).

14. Tête à tuyau flexible selon l'une des revendications 1 à 13, caractérisée en ce qu'elle comporte, à proximité de la zone du contour de la périphérie de l'alésage (30) d'arrivée la plus éloignée de la concavité (41 ou 42) de la cardioïde (37 ou 30), un organe d'étranglement (62) qui pénètre dans le plan de distribution (32-32) (Figure 1).

15. Tête à tuyau flexible selon l'une des revendications 1 à 14, caractérisée en ce que l'organe d'étranglement (62) est monté à poste fixe, mais de manière à être amovible, sur une surface de délimitation (53) du plan de distribution (32-32) (Figure 1).

16. Tête à tuyau flexible selon l'une des revendications 1 à 15, caractérisée en ce que les plans de distribution (32-32 et 33-33) sont constitués par des cames ou des fentes (34 et 35 ou 134 et 135) qui pénètrent normalement à la direction d'écoulement dans le contour du corps d'embout (11 ou 111) et qu'elle comprend, sur le contour du corps d'embout (11 ou 111), entre l'une des surfaces de délimitation (46) d'un plan de distribution (32-32) et l'autre surface de délimitation (47) du plan de distribution suivant (33-33), un corps de guidage de l'écoulement en forme de cloche (40 ou 140) (Figures 1 et 5).

17. Tête à tuyau flexible selon l'une des revendications 1 à 16, caractérisée en ce qu'elle comporte, entre l'extrémité du bord d'embout (11) et le mandrin (7) qu'il porte, un corps annulaire (14, 63) monté coaxialement et amovible (Figure 1).

18. Tête à tuyau flexible selon l'une des revendications 1 à 17, caractérisée en ce que le corps annulaire (14, 63) est monté et/ou réalisé de manière à pouvoir être déplacé élastiquement par des organes de réglage (64) au moins partiellement dans le sens radial par rapport à l'intervalle annulaire (17) (Figure 1).

19. Tête à tuyau flexible selon l'une des revendications 1 à 5 et 8 à 18, caractérisée en ce que le dispositif d'étrangement (45, 60, 61) est constitué par un rétrécissement de section fixe (45) situé entre les plans de distribution (32-32 et 33-33) dans la zone de l'alésage (30) du conduit d'arrivée et par un piston mobile (60) qui comprend une surface d'extrémité oblique (61) et qui correspond au dernier plan de distribution (33-33).

20. Tête à tuyau flexible selon l'une des revendications 1 à 5 et 8 à 19, caractérisée en ce que le piston (60) peut se déplacer d'une manière limitée dans le sens axial à partir de l'extrémité libre de la tête de tuyau flexible (1) sous l'action d'organes de commande (58) comportant un filetage différentiel et une tige (59).

Fig.1

0 118 692

## Fig. 2

Fig. 3

Fig. 4

Fig. 5

Fig. 6

Fig. 7.